# EUROPEAN PATENT APPLICATION

(11) **EP 4 749 726 A1**
(43) Date of publication of application: **27.05.2026**
(21) Application number: 25207931.4
(22) Date of filing: 10.10.2025
(51) Int. Cl.: H01M 8/04029, H01M 8/04089, H01M 8/0438, H01M 8/04746, H01M 8/1007

(54) **FUEL CELL COOLANT OVER-PRESSURIZATION SYSTEM**

(30) Priority: 07.11.2024 US 202418940607
(71) Applicant: Honeywell International Inc., Charlotte, NC 28202 (US)
(72) Inventor: TRNKA, Pavel, Charlotte, 28202 (US); BRENNER, Filip, Charlotte, 28202 (US); MACKA, Jan, Charlotte, 28202 (US); KOTABA, Ondrej, Charlotte, 28202 (US); TESAR, Jaroslav, Charlotte, 28202 (US); ZLOMEK, Martin, Charlotte, 28202 (US)
(74) Representative: Ingrassia, Fisher & Lorenz UK Ltd.

(57) **Abstract**

A system includes a fuel cell stack. A liquid coolant loop is coupled to provide coolant to the fuel cell stack. An expansion tank is coupled to the coolant loop and has an expansion tank inlet to couple to a fuel cell stack cathode inlet. An inlet check valve has a relative cracking pressure dpᵢₙ and is coupled between the fuel cell stack cathode inlet and the expansion tank inlet to over-pressurize the coolant in the coolant loop.

## Description

### STATEMENT REGARDING FEDERALLY SPONSORED RESEARCH OR

### DEVELOPMENT

This invention was made with Government support under [S010174709] awarded by Clean Aviation Joint Undertaking. The Government has certain rights in the invention.

### BACKGROUND

Proton exchange membrane fuel cells (PEMFC) are typically liquid cooled. Safety requires the coolant to be over-pressurized with respect to the oxidizer in the cathode and with respect to the fuel in the anode. This ensures that in a case of leakage the coolant leaks to the anode or cathode and not vice versa. This is important to prevent cooling circuit aeration and most importantly to prevent a risk of explosive oxidizer/fuel mixture accumulation in the cooling circuit or fuel leakage through the coolant circuit.

It is a standard solution to include the expansion tank in the cooling circuit to pressurize it - typically to a constant pressure. However, this is not sufficient for the coolant pressurization for high power density PEMFCs that have thin bipolar plates that are easily damaged by high pressures.

### SUMMARY

A system includes a fuel cell stack. A liquid coolant loop is coupled to provide coolant to the fuel cell stack. An expansion tank is coupled to the coolant loop and has an expansion tank inlet to couple to a fuel cell stack cathode inlet. An inlet check valve has a relative cracking pressure dpᵢₙ and is coupled between the fuel cell stack cathode inlet and the expansion tank inlet to over-pressurize the coolant in the coolant loop.

### BRIEF DESCRIPTION OF THE DRAWINGS

FIG. 1 is a simplified block flow diagram of a portion of an improved proton exchange membrane fuel cell-based power generator system having coolant over-pressurization according to an example embodiment.
FIG. 2 is a block flow diagram illustrating an improved proton exchange membrane fuel cell-based power generator system according to an example embodiment.
FIG. 3 is a simplified block flow diagram of a portion of an alternative improved proton exchange membrane fuel cell-based power generator system according to an example embodiment.
FIG. 4 is a simplified block flow diagram of a portion of an alternative improved proton exchange membrane fuel cell-based power generator system according to an example embodiment.
FIG. 5 is a simplified block flow diagram of a portion of an alternative improved proton exchange membrane fuel cell-based power generator system according to an example embodiment.
FIG. 6 is a flowchart illustrating method of providing coolant over-pressurization according to an example embodiment.
FIG. 7 is a block schematic diagram of a computer system to implement one or more example embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

Proton exchange membrane fuel cells (PEMFC) are typically liquid cooled. Safety requires the coolant to be over-pressurized with respect to the oxidizer gas in the cathode and with respect to the fuel in the anode. This ensures that in a case of leakage the coolant leaks that may aerate the anode or cathode and not vice versa. This is important to prevent cooling circuit aeration and most importantly to prevent a risk of explosive oxidizer/fuel mixture accumulation in the cooling circuit or fuel leakage through the coolant circuit.

It is a standard solution to include the expansion tank in the cooling circuit to pressurize it - typically to a constant pressure. However, this is not sufficient for the coolant pressurization for high power density PEMFCs that have thin bipolar plates that are easily damaged by exposure to too much pressure. PEMFs would benefit by using narrow pressure difference control between the coolant and gas channels to avoid stack damage.

For PEMFC used in aviation related applications, the pressure in gas channels changes not only with stack power, but also with flight altitude. The coolant pressure must follow the gas pressure, it must maintain the over-pressurization, but it must not exceed a pressure difference limit.

An improved proton exchange membrane fuel cell system having a fuel cell stack coolant loop achieves coolant over-pressurization while not exceeding a pressure difference limit by connecting a gas side of a coolant expansion tank with fuel cell stack cathode inlet ducting to equalize their pressures. A coolant port of the coolant expansion tank is connected to an outlet of a fuel cell stack coolant loop channel.

Several different methods may be used to provide a desired level of over-pressurization. In a first example, an inlet check valve is coupled between the expansion tank gas side and the cathode inlet. The inlet check valve has a selected cracking pressure and provide additional air to the gas side of the expansion tank at input pressures above the cracking pressure.

A second example includes the use of a pressure difference control valve connected between the outlet of the fuel cell stack coolant loop channel and a coolant port of the coolant expansion tank. The pressure difference control valve can be alternatively replaced by a fixed size coolant flow restricting orifice.

A third example includes the use of a mechanical spring in the expansion tank that increases the coolant pressure above the pressure on the expansion tank gas side.

A fourth example includes controlling the expansion tank gas side pressure by an electronical or mechanical pressure regulating valve with a relief functionality.

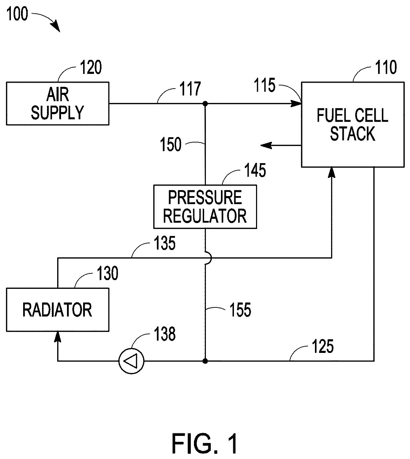

FIG. 1 is a simplified block flow diagram of a portion of an improved proton exchange membrane fuel cell-based power generator system 100 having coolant over-pressurization. System 100 includes a fuel cell stack 110 having a cathode inlet 115 coupled to a cathode inlet channel 117 to provide pressurized gas including oxygen to a cathode membrane in the fuel cell stack 110. The gas may be provided by an air supply 120 which may receive ambient air or compressed air in various examples.

Fuel cell stack 110 is coupled to a coolant return channel 125, radiator 130, and a coolant supply channel 135. Radiator 130 may be any form of heat exchanger that removes heat from liquid coolant circulating in a coolant loop comprising the coolant channel 125, radiator 130, return channel 135 and channel or channels in the fuel cell stack 110 which may be conventional and are not shown for convenience of illustration. A pump 138 may be used to pump coolant fluid through the coolant loop.

A pressure regulator 145 has an input channel 150 coupled to cathode inlet channel 117 and an output channel 155 coupled to coolant channel 125 and operates to maintain pressure in the coolant loop greater than pressure at the cathode input 115. The regulator 145 may also operate to avoid coolant boiling by ensuring the coolant pressure is below a boiling pressure. Various means of regulating the pressure may be used as illustrated in further figures.

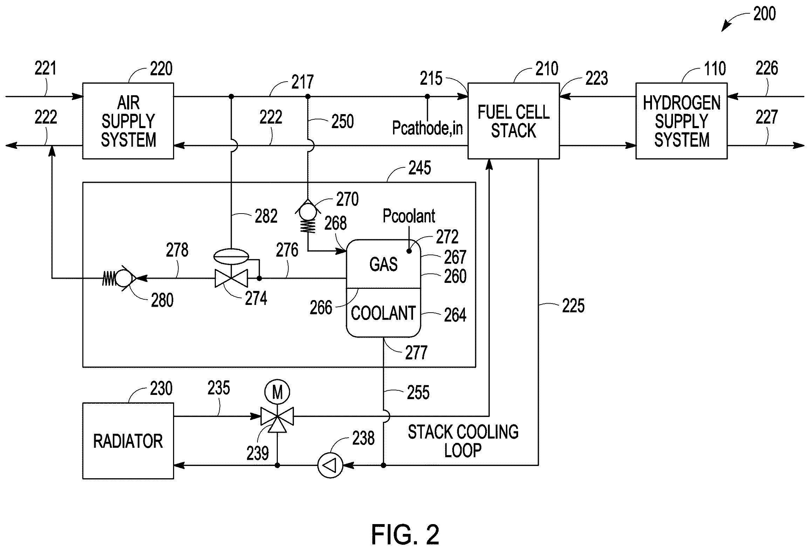

FIG. 2 is a block flow diagram illustrating an improved proton exchange membrane fuel cell-based power generator system 200. System 200 includes a fuel cell stack 210 having a cathode inlet 215 coupled to a cathode inlet channel 217 to provide pressurized gas including oxygen to a cathode membrane in the fuel cell stack 200. The gas may be provided by an air supply 220 which may receive ambient air 221 or compressed air in various examples. Exhaust from the cathode is carried via an exhaust channel 222 which may extend through air supply 220 to exhaust to ambient.

Fuel cell stack 210 includes an anode inlet 223 coupled to a hydrogen supply system 224 that receives hydrogen 226 and provides the hydrogen to the anode inlet 223. Exhaust from the anode of the fuel cell stack 210 is exhausted back to the hydrogen supply system 224 for either recirculation or remaining hydrogen or exhaust at 227. Hydrogen supply system 224 may generate hydrogen or receive hydrogen in various examples, such as from a compressed hydrogen source.

Fuel cell stack 210 in one example is cooled by use of a liquid coolant that circulated within the fuel cell stack 210 in a conventional manner. Fuel cell stack 210 is coupled to a coolant return channel 225, radiator 230, and a coolant supply channel 235. Radiator 230 may be any form of heat exchanger that removes heat from liquid coolant circulating in a coolant loop comprising the coolant channel 225, radiator 230, return channel 235 and channel or channels in the fuel cell stack 210 which may be conventional and are not shown for convenience of illustration. A pump 238 may be used to pump coolant fluid through the coolant loop.

In one example, a temperature control valve 239 is coupled to the supply channel 235 and return channel 225 and operates to control the temperature of the coolant to a setpoint by controlling flow to the radiator 230. More flow to the radiator is done to reduce the temperature of the coolant, while diverting flow from the return channel 225 to the supply channel 235 tends to allow the coolant to increase in temperature. Such temperature control can be performed to optimize performance of the fuel cell stack 210. Temperature control valve 239 may include a temperature sensor or utilize the output of a temperature sensor positioned to sense the temperature of the coolant. A controller, not shown, may be used to control the temperature control valve 239 to a settable temperature setpoint.

Maintaining the coolant pressure within a selected range that is higher than the pressures at both the cathode inlet 215 and anode inlet 223 ensures that damage to the fuel cell stack 210 does not occur and that gas does not enter the cooling circuit.

A pressure regulator 245 has an input channel 250 coupled to cathode inlet channel 217 and an output channel 255 coupled to coolant channel 225. Pressure regulator 245 operates to maintain pressure in the coolant loop greater than pressure at the cathode input 215. The pressure regulator 245 may also operate to avoid coolant boiling by ensuring the coolant pressure is below a boiling pressure.

In one example, pressure regulator 245 includes an expansion tank 260 having a top portion 262 filled with gas and a bottom portion 264 filled with coolant. An optional divider, such as a flexible membrane 266 is supported between the top and bottom portions to separate the gas from the coolant. The use of a flexible membrane 266, such as polymer, rubber, or other flexible permeation resistant material enables operation of the fuel cell system 200 in any orientation. The membrane can also reduce chances of coolant boiling due to low pressure.

The expansion tank 260 in one example is coupled via an expansion tank inlet 268 to the input channel 250, to receive gas from the cathode inlet channel 217. In one example, input channel 250 includes an inlet check valve 270 oriented to allow airflow towards the expansion tank inlet 268 to pressurize the expansion tank 260. Inlet check valve 270 has a cracking pressure of delta p in, written as dpᵢₙ in one example, which should be as low as possible. In one example, dpᵢₙ can have as low a value as feasibly possible. However, dpᵢₙ should not be greater than fuel cell cathode channel pressure drop at full air flow (the air pressure drop, p_{cathode_in} - p_{cathode_out}, between cathode input 215 and exhaust channel 222. The pressure drop ensures the coolant outlet pressure has a higher pressure than cathode air outlet pressure p_{cathode_out}" Moreover, considering an existing fuel cell coolant channel pressure drop (coolant pressure drop, that is p_{coolant_in} - p_{coolant_out}), the coolant inlet pressure will also be greater than cathode air inlet pressure p_{cathodc_in}.

Inlet check valve 270 is connected between the expansion tank 260 and the cathode inlet 215 to pressurize the expansion tank.

The expansion tank 260 in one example is coupled via the differential pressure regulating valve 274 to the exhaust pipe 222. In one example, the differential pressure regulating valve 274 is a mechanical proportional valve with a diaphragm that actuates the valve stem. The cathode inlet 217 is coupled to one side of the diaphragm and the expansion tank channel 276 or a coolant inlet channel 277 is coupled to the other side. The pressure difference between gases creates the actuation force.

Pressure regulating valve 274 is coupled to an exhaust channel 278 which includes an outlet check valve 280 for ensuring exhaust or ambient air does not flow backwards toward the differential pressure regulating valve 274. In one example, differential pressure regulating valve 274 has a setpoint of delta P. Differential pressure regulating valve 274 is connected between the expansion tank 260 and the exhaust channel 278 with differential pressure sensing performed via a channel connection 282 between the cathode inlet and the expansion tank or the coolant inlet channel 277 to depressurize the expansion tank 260 should the difference in pressure between the coolant pressure and the cathode pressure become greater than the delta P setpoint.

The outlet check valve 280 is connected in series between the differential pressure regulating valve 274 and the exhaust pipe 222 to stop depressurization if the pressure of the coolant, P_{coolant} is lower than the pressure of the exhaust, Pₒᵤₜ: *p_{coolant}* < *pₒᵤₜ.* Coolant boiling is avoided by not letting the coolant absolute pressure drop below a certain threshold *pₒᵤₜ.*

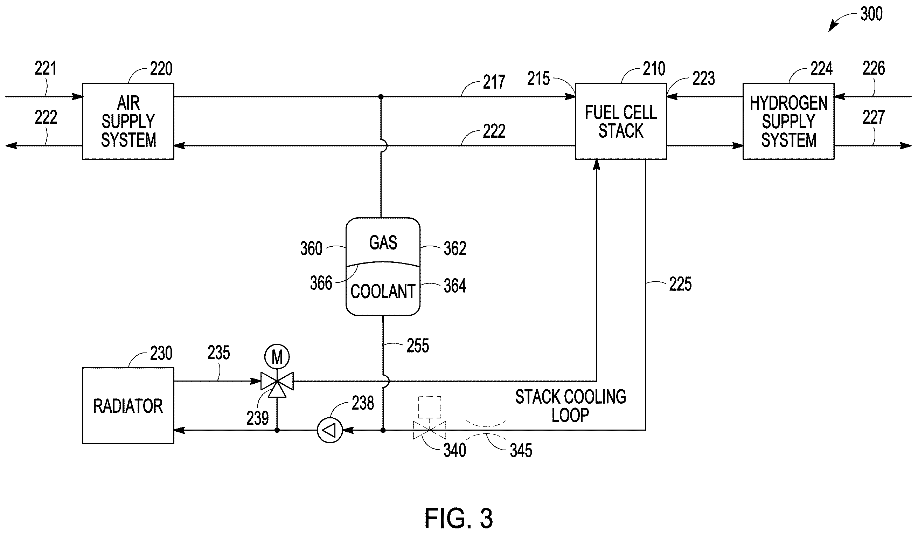

FIG. 3 is a simplified block flow diagram of a portion of an alternative improved proton exchange membrane fuel cell-based power generator system 300 having coolant over-pressurization. System 300 includes several of the same components of FIG. 2 labeled with the same reference numbers. Fuel cell stack 210 has a cathode inlet 215 coupled to a cathode inlet channel 217 to provide pressurized gas including oxygen to a cathode membrane in the fuel cell stack 300.

Fuel cell stack 210 is coupled to a coolant return channel 225, radiator 230, and a coolant supply channel 235. Radiator 230 may be any form of heat exchanger that removes heat from liquid coolant circulating in a coolant loop comprising the return coolant channel 225, radiator 230, supply coolant channel 235 and channel or channels in the fuel cell stack 210 which may be conventional and are not shown for convenience of illustration. A pump 238 may be used to pump coolant fluid through the coolant loop.

In one example, a temperature control valve 239 is coupled to the supply channel 235 and return channel 225 and operates to control the temperature of the coolant to a setpoint by controlling flow to the radiator 230. More flow to the radiator is done to reduce the temperature of the coolant, while diverting flow from the return channel 225 to the supply channel 235 tends to allow the coolant to increase in temperature. Such temperature control can be performed to optimize performance of the fuel cell stack 210. Temperature control valve 239 may include a temperature sensor or utilize the output of a temperature sensor positioned to sense the temperature of the coolant. A controller, not shown, may be used to control the temperature control valve 239 to a settable temperature setpoint.

In one example, the return coolant channel 225 may optionally include a constant delta pressure control valve 340 or an orifice 345, both of which may be optionally used to control pressure in the coolant loop.

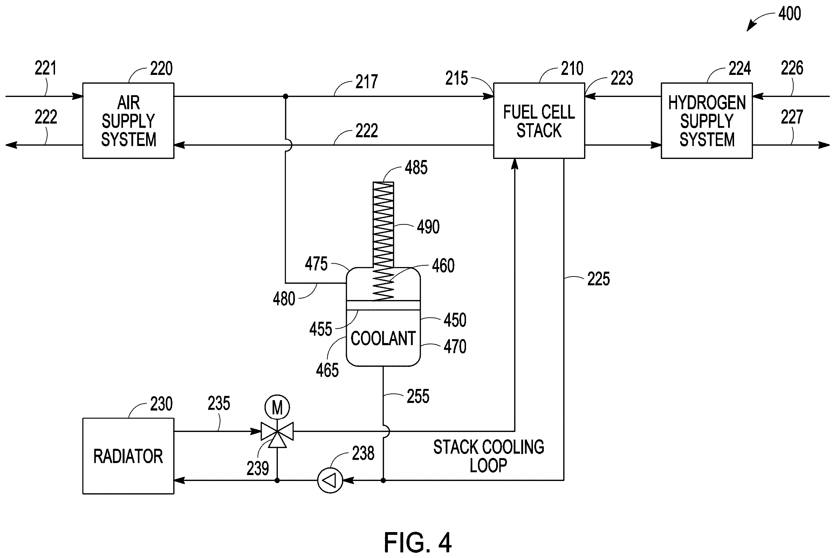

FIG. 4 is a simplified block flow diagram of a portion of an alternative improved proton exchange membrane fuel cell-based power generator system 400 having coolant over-pressurization. System 400 includes
several of the same components of FIG. 2 labeled with the same reference numbers. Fuel cell stack 210 has a cathode inlet 215 coupled to a cathode inlet channel 217 to provide pressurized gas including oxygen to a cathode membrane in the fuel cell stack 300.

Fuel cell stack 210 is coupled to a coolant return channel 225, radiator 230, and a coolant supply channel 235. Radiator 230 may be any form of heat exchanger that removes heat from liquid coolant circulating in a coolant loop comprising the return coolant channel 225, radiator 230, supply coolant channel 235 and channel or channels in the fuel cell stack 210 which may be conventional and are not shown for convenience of illustration. A pump 238 may be used to pump coolant fluid through the coolant loop.

In one example, a temperature control valve 239 is coupled to the supply channel 235 and return channel 225 and operates to control the temperature of the coolant to a setpoint by controlling flow to the radiator 230. More flow to the radiator is done to reduce the temperature of the coolant, while diverting flow from the return channel 225 to the supply channel 235 tends to allow the coolant to increase in temperature. Such temperature control can be performed to optimize performance of the fuel cell stack 210. Temperature control valve 239 may include a temperature sensor or utilize the output of a temperature sensor positioned to sense the temperature of the coolant. A controller, not shown, may be used to control the temperature control valve 239 to a settable temperature setpoint.

System 400 includes a coolant expansion tank 450 having a spring-biased diaphragm 455 coupled to a first end of a spring 460 to bias the diaphragm 455 to apply pressure to coolant 465 in a lower portion 470 of the coolant expansion tank 450. An upper portion 475 may contain gas with a channel 480 coupled to ambient or other source of gas at a desired pressure. A second end of the spring is biased against a top inner surface 485 of the expansion tank 450. In one example, the upper portion 475 may include an extension column 490 into which the second end of the spring 460 may extend to reach the top inner surface 485. The Spring 460 may have a spring constant selected to pressurize the coolant at a pressure higher than the pressure at a cathode input.

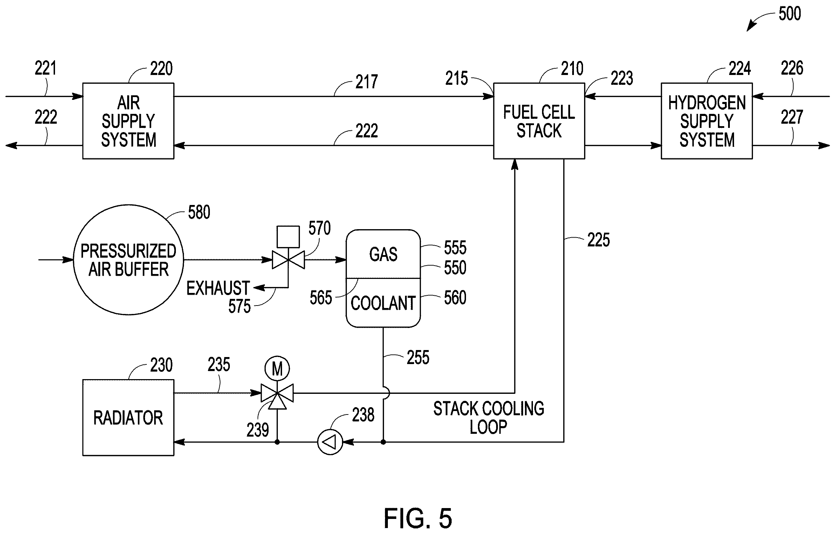

FIG. 5 is a simplified block flow diagram of a portion of an alternative improved proton exchange membrane fuel cell-based power generator system 500 having coolant over-pressurization. System 500 includes several of the same components of FIG. 2 labeled with the same reference numbers. Fuel cell stack 210 has a cathode inlet 215 coupled to a cathode inlet channel 217 to provide pressurized gas including oxygen to a cathode membrane in the fuel cell stack 300.

Fuel cell stack 210 is coupled to a coolant return channel 225, radiator 230, and a coolant supply channel 235. Radiator 230 may be any form of heat exchanger that removes heat from liquid coolant circulating in a coolant loop comprising the return coolant channel 225, radiator 230, supply coolant channel 235 and channel or channels in the fuel cell stack 210 which may be conventional and are not shown for convenience of illustration. A pump 238 may be used to pump coolant fluid through the coolant loop.

In one example, a temperature control valve 239 is coupled to the supply channel 235 and return channel 225 and operates to control the temperature of the coolant to a setpoint by controlling flow to the radiator 230. More flow to the radiator is done to reduce the temperature of the coolant, while diverting flow from the return channel 225 to the supply channel 235 tends to allow the coolant to increase in temperature. Such temperature control can be performed to optimize performance of the fuel cell stack 210. Temperature control valve 239 may include a temperature sensor or utilize the output of a temperature sensor positioned to sense the temperature of the coolant. A controller, not shown, may be used to control the temperature control valve 239 to a settable temperature setpoint.

System 500 includes a coolant expansion tank 550 having an upper gas portion 555 and a lower coolant portion 560 separated by a flexible membrane 565. In one example, the upper gas portion 555 is coupled via an electronically actuated or mechanically actuated pressure difference control valve 570 with a relief 575. The valve 570 may be coupled to a pressurized air buffer 580 which may additionally serve as a gas source for a cathode of the fuel cell stack 510. The valve 570 provides a source of controllable pressure to the upper gas portion 555 of the coolant expansion tank to control the pressure of the coolant in the lower coolant portion and coolant loop to be controllable higher than gas pressure at the cathode input.

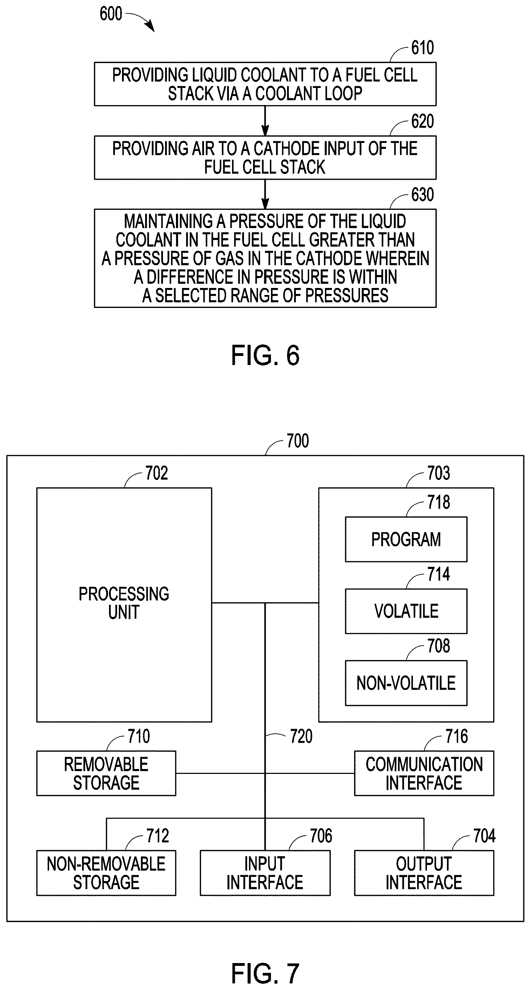

FIG. 6 is a flowchart illustrating method 600 of providing coolant over-pressurization. Method 600 begins at operation 610 by providing liquid coolant to a fuel cell stack via a coolant loop. Air is provided to a cathode input of the fuel cell stack at operation 620. Pressure of the liquid coolant in the fuel cell stack is maintained to be greater than a pressure of gas in the cathode. In one example, a difference in pressure between the air and coolant in the fuel cell stack is maintained with a selected range of pressures. The selected range of pressures may be selected to prevent fuel cell stack damage, which could result in hydrogen leaking into the coolant loop.

FIG. 7 is a block schematic diagram of a computer 700 to implement one or more controllers to control receive pressure and temperature information and control electrically actuatable valves and pumps for maintaining coolant pressure above a cathode pressure. Computer 700 may be configured for performing methods and algorithms according to example embodiments. All components need not be used in various embodiments.

One example computing device in the form of a computer 700 may include a processing unit 702, memory 703, removable storage 710, and non-removable storage 712. Although the example computing device is illustrated and described as computer 700, the computing device may be in different forms in different embodiments. For example, the computing device may instead be a smartphone, a tablet, smartwatch, smart storage device (SSD), or other computing device including the same or similar elements as illustrated and described with regard to FIG. 7. Devices, such as smartphones, tablets, and smartwatches, are generally collectively referred to as mobile devices or user equipment.

Although the various data storage elements are illustrated as part of the computer 700, the storage may also or alternatively include cloud-based storage accessible via a network, such as the Internet or server-based storage. Note also that an SSD may include a processor on which the parser may be run, allowing transfer of parsed, filtered data through I/O channels between the SSD and main memory.

Memory 703 may include volatile memory 714 and non-volatile memory 708. Computer 700 may include - or have access to a computing environment that includes - a variety of computer-readable media, such as volatile memory 714 and non-volatile memory 708, removable storage 710 and non-removable storage 712. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 700 may include or have access to a computing environment that includes input interface 706, output interface 704, and a communication interface 716. Output interface 704 may include a display device, such as a touchscreen, that also may serve as an input device. The input interface 706 may include one or more of a touchscreen, touchpad, mouse, keyboard, camera, one or more device-specific buttons, one or more sensors integrated within or coupled via wired or wireless data connections to the computer 700, and other input devices. The computer may operate in a networked environment using a communication connection to connect to one or more remote computers, such as database servers. The remote computer may include a personal computer (PC), server, router, network PC, a peer device or other common data flow network switch, or the like. The communication connection may include a Local Area Network (LAN), a Wide Area Network (WAN), cellular, Wi-Fi, Bluetooth, or other networks. According to one embodiment, the various components of computer 700 are connected with a system bus 720.

Computer-readable instructions stored on a computer-readable medium are executable by the processing unit 702 of the computer 700, such as a program 718. The program 718 in some embodiments comprises software to implement one or more methods described herein. A hard drive, CD-ROM, and RAM are some examples of articles including a non-transitory computer-readable medium such as a storage device. The terms computer-readable medium, machine readable medium, and storage device do not include carrier waves or signals to the extent carrier waves and signals are deemed too transitory. Storage can also include networked storage, such as a storage area network (SAN). Computer program 718 along with the workspace manager 722 may be used to cause processing unit 702 to perform one or more methods or algorithms described herein.

### Examples:

1. A system includes a fuel cell stack having a liquid coolant loop coupled to provide coolant to the fuel cell stack. An expansion tank is coupled to the coolant loop and has an expansion tank inlet to couple to a fuel cell stack cathode inlet. An inlet check valve with a relative cracking pressure dpᵢₙ is coupled between the fuel cell stack cathode inlet and the expansion tank inlet.
2. The system of example 1 wherein the expansion tank includes a top portion including the expansion tank inlet, a bottom portion coupled to the coolant loop, and a flexible membrane dividing the top portion and the bottom portion.
3. The system of example 2 and further including an air supply system coupled to the fuel cell stack inlet and a hydrogen supply system coupled to a fuel cell stack anode.
4. The system of any of examples 1-3 wherein the coolant loop includes a supply channel coupled to the fuel cell stack, a return channel coupled to the fuel cell stack, and a radiator coupled between the supply channel and the return channel.
5. The system of example 4 wherein the coolant loop further includes a pump coupled to pump coolant through the supply and return channels.
6. The system of example 5 wherein the coolant loop further includes a temperature control valve coupled between the return channel and the supply channel to control a temperature of the coolant to a setpoint by controlling coolant flow to the radiator.
7. The system of any of examples 1-6 and further including a gas exhaust line to ambient, a differential pressure regulating valve with a differential pressure setpoint dp coupled between the expansion tank and the exhaust line, and an outlet check valve having a absolute cracking pressure pₒᵤₜ coupled between the differential pressure regulating valve and the exhaust line.
8. The system of example 7 wherein the dp, pₒᵤₜ, and dpᵢₙ are selected to prevent fuel cell stack damage and coolant boiling.
9. A method includes providing liquid coolant to a fuel cell stack via a coolant loop, providing air to a cathode input of the fuel cell stack, and maintaining a pressure of the liquid coolant in the fuel cell stack greater than a pressure of gas in the cathode wherein a difference in pressure is within a selected range of pressures.
10. The method of example 9 wherein the range of pressures is selected to prevent fuel cell stack damage.
11. The method of any of examples 9-10 wherein the range of pressures is selected to prevent gas from leaking into the liquid coolant.
12. The method of any of examples 9-11 wherein maintaining the pressure includes providing air via a check valve having a selected cracking pressure to an expansion tank coupled between the cathode input and the coolant loop.
13. A system includes a fuel cell stack having a cathode input, a coolant loop coupled to cool the fuel cell stack, and means for maintaining a pressure of coolant in the fuel cell stack to be greater than a pressure of gas in the cathode.
14. The system of example 13 wherein the means for maintaining the pressure of coolant in the coolant loop to be greater than a pressure of gas in the cathode loop includes an expansion tank coupled between the coolant loop and the cathode input and means for restricting flow of coolant in the coolant loop.
15. The system of example 14 wherein the means for restricting flow of coolant coupled in the coolant loop includes an orifice coupled in the coolant loop.
16. The system of any of examples 14-15 wherein the means for restricting flow of coolant in the coolant loop includes a constant delta pressure control valve coupled in the coolant loop.
17. The system of any of examples 13-16 wherein the means for maintaining the pressure of coolant in the fuel cell stack to be greater than a pressure of gas in the cathode includes an expansion tank coupled between the coolant loop and the cathode input wherein the expansion tank includes a spring-biased diaphragm separating coolant and gas in the cathode input.
18. The system of any of examples 13-17 wherein the means for maintaining the pressure of coolant in the fuel cell stack to be greater than a pressure of gas in the cathode includes an expansion tank coupled to the coolant loop, a pressurized gas buffer, and a pressure difference control valve coupled between the pressurized gas buffer and the expansion tank.
19. The system of example 18 wherein the expansion tank includes a membrane coupled between coolant in the expansion tank and gas in the expansion tank.
20. The system of any of examples 13-19 wherein the means for maintaining the pressure of coolant in the fuel cell stack to be greater than a pressure of gas in the cathode includes an expansion tank coupled to the coolant loop and a spring biased diaphragm disposed between an upper air portion of the expansion tank coupled to a cathode input and a lower coolant portion of the expansion tank coupled to the coolant loop.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

Furthermore, the claimed subject matter may be implemented as a method, apparatus, or article of manufacture using standard programming and engineering techniques to produce software, firmware, hardware, or any combination thereof to control a computing device to implement the disclosed subject matter. The term, "article of manufacture," as used herein is intended to encompass a computer program accessible from any computer-readable storage device or media. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A power generator (200) comprising:
a fuel cell stack (210);
a liquid coolant loop (225, 230, 235) coupled to provide coolant to the fuel cell stack;
an expansion tank (260) coupled to the coolant loop;
an expansion tank inlet (268) to couple to a fuel cell stack cathode inlet (215);
an inlet check valve (270) with a relative cracking pressure dpᵢₙ coupled between the fuel cell stack cathode inlet and the expansion tank inlet.

2. The power generator of claim 1 wherein the expansion tank comprises:
a top portion (267) including the expansion tank inlet:
a bottom portion (264) coupled to the coolant loop; and
a flexible membrane (266) dividing the top portion and the bottom portion.

3. The power generator of claim 2 and further comprising:
an air supply system (220) coupled to the fuel cell stack inlet (215); and
a hydrogen supply system (224) coupled to a fuel cell stack anode.

4. The power generator of any one of claims 1-3 wherein the coolant loop comprises:
a supply channel (235) coupled to the fuel cell stack;
a return channel (225) coupled to the fuel cell stack; and
a radiator (230) coupled between the supply channel and the return channel.

5. The power generator of claim 4 wherein the coolant loop further comprises a pump (238) coupled to pump coolant through the supply and return channels.

6. The power generator of claim 5 wherein the coolant loop further comprises a temperature control valve (239) coupled between the return channel and the supply channel to control a temperature of the coolant to a setpoint by controlling coolant flow to the radiator.

7. The power generator of any one of claims 1-3 and further comprising:
a gas exhaust line (222) to ambient;
a differential pressure regulating valve (274) with a differential pressure setpoint dp coupled between the expansion tank and the exhaust line; and
an outlet check valve (280) having a absolute cracking pressure pₒᵤₜ coupled between the differential pressure regulating valve and the exhaust line.

8. The power generator of claim 7 wherein the dp, pₒᵤₜ, and dpᵢₙ are selected to prevent fuel cell stack damage and coolant boiling.

9. A method (600) comprising:
providing (610) liquid coolant to a fuel cell stack via a coolant loop;
providing (620) air to a cathode input of the fuel cell stack; and
maintaining (630) a pressure of the liquid coolant in the fuel cell stack greater than a pressure of gas in the cathode wherein a difference in pressure is within a selected range of pressures.

10. The method of claim 9 wherein the range of pressures is selected to prevent fuel cell stack damage.

11. The method of claim 9 wherein the range of pressures is selected to prevent gas from leaking into the liquid coolant.

12. The method of claim 9 wherein maintaining the pressure comprises providing air via a check valve having a selected cracking pressure to an expansion tank coupled between the cathode input and the coolant loop.

13. A system (100, 200, 300, 400, 500) comprising:
a fuel cell stack (110, 210) having a cathode input;
a coolant loop (225, 230, 235) coupled to cool the fuel cell stack; and
means (260, 360, 450, 550) for maintaining a pressure of coolant in the fuel cell stack to be greater than a pressure of gas in the cathode.

14. The system of claim 13 wherein the means for maintaining the pressure of coolant in the coolant loop to be greater than a pressure of gas in the cathode loop comprises an expansion tank coupled between the coolant loop and the cathode input and means for restricting flow of coolant in the coolant loop.

15. The system of claim 14 wherein the means for restricting flow of coolant coupled in the coolant loop comprises an orifice (345) coupled in the coolant loop.
